# EUROPÄISCHE PATENTSCHRIFT

(11) **EP 3 250 860 B1**
(45) Veröffentlichungstag und Bekanntmachung des Hinweises auf die Patenterteilung: **04.06.2025**
(21) Anmeldenummer: 16711119.4
(22) Anmeldetag: 22.01.2016
(51) Int. Cl.: F24H 1/28, F28D 1/03, F28D 9/00

(54) **HEIZKESSEL**
BOILER
CHAUDIÈRE DE CHAUFFAGE

(30) Priorität: 26.01.2015 DE 102015101048
(43) Veröffentlichungstag der Anmeldung: 06.12.2017
(73) Patentinhaber: Viessmann Holding International GmbH, 35108 Allendorf (Eder) (DE)
(72) Erfinder: GERLING, Detlev, 12555 Berlin (DE); VOLKMANN, Norbert, 12527 Berlin (DE); GUHL, Alexander, 12459 Berlin (DE)
(74) Vertreter: Wolf & Wolf Patentanwaltsgesellschaft mbH
(86) Internationale Anmeldenummer: PCT/DE2016/100024
(87) Internationale Veröffentlichungsnummer: WO 2016/119776

(56) Entgegenhaltungen:
- WO-A2-2008/138803
- DE-U1- 202008 011 266
- JP-A- 2006 214 628
- KR-A- 20120 045 249
- NL-C2- 1 015 206

## Beschreibung

Die Erfindung betrifft einen Heizkessel gemäß dem Oberbegriff des Patentanspruchs 1.

Ein Heizkessel der eingangs genannten Art ist aus dem Patentdokument EP 2 735 812 A2 bekannt. Dieser Heizkessel besteht aus einer zur Aufnahme und Führung heißer Abgase ausgebildeten Kammer, die von einer Vielzahl von abgekantet ausgebildeten und sandwichartig zueinander angeordneten Plattenelementen umschlossen und mit einer Vielzahl von jeweils zwischen den Plattenelementen ausgebildeten, zur Abkühlung der heiße Abgase verwendeten Strömungsführungen verbunden ist. Die genannten Strömungsführungen sind dabei unterhalb der Kammer angeordnet. Das heiße Abgas strömt somit aus der Kammer in die mit sich kreuzenden Rippen oder Nuten versehenen Strömungsführungen und von dort in eine Abgassammelkammer. Die Übertragung von Wärme vom heißen Abgas auf das den aus den Plattenelement gebildeten Korpus umströmende Wasser erfolgt dabei insbesondere im Bereich der gerippten und die Strömungsführung umschließenden Taschen.

Die im Oberbegriff des Patentanspruchs 1 verwendete Maßgabe, dass die Kammer aus zwei Plattenelementen gebildet ist, bringt dabei zum Ausdruck, dass - gewissermaßen als Grundmodul - grundsätzlich mindestens zwei Plattenelemente vorgesehen sind, d. h. regelmäßig sind erfindungsgemäß (wie beim eingangs genannten Stand der Technik) aber nicht nur zwei, sondern eine ganze Reihe bzw. eine Vielzahl von Plattenelementen vorgesehen. Das gleiche gilt dabei entsprechend für die Strömungsführung. Über die Anzahl der Plattenelemente wird somit die Länge bzw. Größe der Kammer festgelegt.

Dokument KR 2012 0045249 A zeigt einen Heizkessel mit den Merkmalen des Oberbegriffs des unabhängigen Anspruchs 1.

Der Erfindung liegt die Aufgabe zugrunde, einen Heizkessel der eingangs genannten Art zu verbessern. Insbesondere soll ein Heizkessel mit einer verbesserten Wärmeübertragung geschaffen werden. Außerdem soll das Risiko einer Verkalkung und die thermische Beanspruchung des Materials verringert werden.

Diese Aufgabe ist mit einem Heizkessel der eingangs genannten Art durch die im Kennzeichen des Patentanspruchs 1 aufgeführten Merkmale gelöst.

Nach der Erfindung ist also vorgesehen, dass die Strömungsführung zur Ausbildung einer kammerseitig beginnenden Kanalströmung des Abgases als die Kammer vollumfänglich umschließender, vom Abgas durchströmter Flachspaltkanal ausgebildet ist.

Mit anderen Worten zeichnet sich die erfindungsgemäße Lösung somit insbesondere dadurch aus, dass die Kammer von der als Flachspaltkanal ausgebildeten Strömungsführung vollumfänglich umschlossen ausgebildet ist, d. h. die Wärmeübertragung vom Abgas auf ein die Plattenelemente umgebendes Wärmeträgermedium erfolgt nicht mehr nur unterhalb der Kammer, sondern in einem die Kammer radial vollständig umschließenden Flachspaltkanal. Das heiße Abgas gelangt so - und damit in Abkehr vom vorgenannten Stand der Technik - vollumfänglich in die Strömungsführung, so dass über eine Gleichverteilung in Umfangsrichtung die thermische Belastung beim Eintritt in den Flachspaltkanal minimiert wird.

Unter einem Flachspaltkanal ist dabei eine Strömungsführung zu verstehen, die einen Eintrittsquerschnitt, einen Austrittsquerschnitt und dazwischen einen im wesentlichen ebenen, von den Plattenelementen begrenzten Kanal aufweist, wobei die parallel zur Hauptströmungsrichtung des Abgases orientierte Länge des Kanals vielfach größer als die Höhe des Kanals bzw. der Abstand zwischen den Plattenelementen im Kanal ausgebildet ist. Aus Stabilitätsgründen kann dabei, was unten noch genauer erläutert wird, ein Plattenelement im Bereich des Flachspaltkanals mit sich am gegenüberliegenden Plattenelement abstützenden Noppen oder dergleichen versehen sein.

Bei einer besonders bevorzugten Ausführungsform der erfindungsgemäßen Lösung ist dabei vorgesehen, dass der Flachspaltkanal von einem aus den Plattenelementen gebildeten und im Verhältnis zum Flachspaltkanal aufgeweiteten Sammelkanal zur Aufnahme und Führung der abgekühlten Abgase umschlossen ausgebildet ist. Um den erfindungsgemäßen Heizkessel als Brennwertkessel betreiben zu können, ist dabei außerdem, was weiter unten noch genauer erläutert wird, besonders bevorzugt vorgesehen, dass der Sammelkanal kammerabgewandt in einen zweiten Flachspaltkanal ausmündend ausgebildet ist.

Andere vorteilhafte Weiterbildungen ergeben sich aus den abhängigen Patentansprüchen.

Der Vollständigkeit halber wird noch auf die weiter abliegenden Dokumente EP 1 989 499 B1 und DE 10 2008 037 762 A2 hingewiesen.

Der erfindungsgemäße Heizkessel einschließlich seiner vorteilhaften Weiterbildungen gemäß der abhängigen Patentansprüche wird nachfolgend anhand der zeichnerischen Darstellung dreier Ausführungsbeispiele näher erläutert.

Es zeigt
- Figur 1: im Schnitt den erfindungsgemäßen Heizkessel mit insgesamt sechzehn sandwichartig zusammengefügten Taschen aus jeweils zwei Plattenelementen;
- Figur 2: perspektivisch den Heizkessel gemäß Figur 1;
- Figur 3: im Schnitt vier sandwichartig zusammengefügte Taschen aus jeweils zwei Plattenelementen des in Figur 1 dargestellten Heizkessels;
- Figur 4: im Schnitt eine einzelne Tasche aus zwei Plattenelementen des in Figur 1 dargestellten Heizkessels;
- Figur 5: im Schnitt eine Detailansicht des von zwei Plattenelementen begrenzten, erfindungsgemäßen Flachspaltkanals mit kammerseitigem Eintrittsquerschnitt und sammelkanalseitigem Austrittsquerschnitt;
- Figur 6: eine perspektivische Außenansicht einer aus zwei Plattenelemente bestehenden Tasche für den erfindungsgemäßen Heizkessel;
- Figur 7: in Draufsicht eine alternative Ausführungsform eines Plattenelements für einen erfindungsgemäßen Heizkessel; und
- Figur 8: in Draufsicht eine weitere Ausführungform eines Plattenelements für einen erfindungsgemäßen Heizkessel.

Der in den Figuren dargestellte Heizkessel besteht zunächst einmal aus einer zur Aufnahme und Führung heißer Abgase ausgebildeten Kammer 1. Die heißen Abgase werden dabei mit Hilfe eines (nicht extra dargestellten) Brenners (insbesondere Gas- oder Ölbrenners) erzeugt, wobei dieser wahlweise in der Kammer 1 selbst, die dann eine Brennkammer bildet, oder auch, wie bei der Lösung gemäß der eingangs genannten EP 2 735 812 A2, in einer der Kammer 1 vorgelagerten Brennkammer angeordnet sein kann. In beiden Fällen ist an dem dem Brenner gegenüberliegenden Ende zum Verschließen der Kammer 1 ein Deckelelement 10 angeordnet.

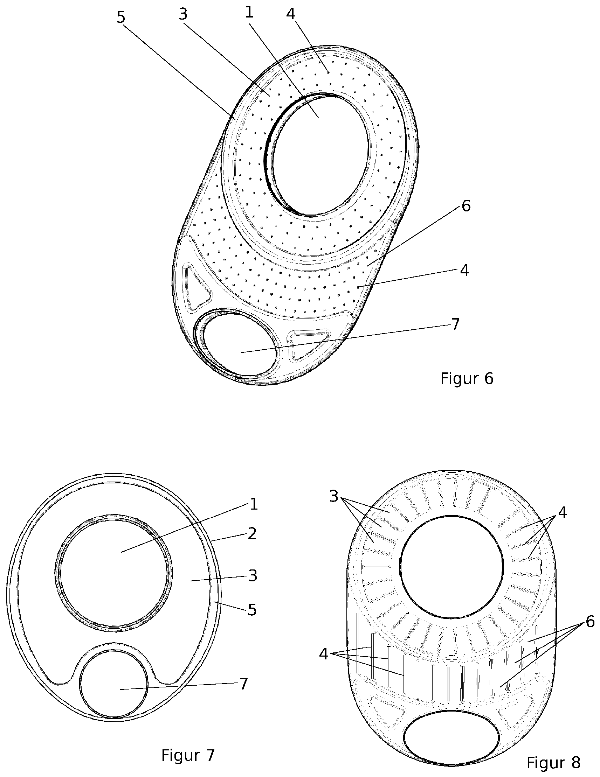

Wie aus den Figuren ersichtlich, ist die Kammer 1 von zwei abgekantet ausgebildeten bzw. tiefgezogenen und sandwichartig zueinander angeordneten, insbesondere miteinander verschweißten, Plattenelementen 2 umschlossen und mit einer zwischen den Plattenelementen 2 ausgebildeten, zur Abkühlung der heiße Abgase verwendeten Strömungsführung 3 verbunden. Die Plattenelemente 2, die in Draufsicht, wie Figur 6 und 7 zeigen, vorzugsweise eine ovale Form aufweisen, bestehen dabei vorzugsweise aus Stahl, insbesondere Edelstahl.

Wesentlich für den erfindungsgemäßen Heizkessel ist nun, und zwar für alle möglichen Ausführungsformen, dass die Strömungsführung 3 als die Kammer 1 vollumfänglich umschließender Flachspaltkanal ausgebildet ist.

Diese Maßgabe führt dazu, dass das aus der Kammer abströmende heiße Abgas auf eine große Wärmeübertragungsfläche im Flachspaltkanal verteilt und somit bei geringer Verkalkungsneigung eine hohe Abkühlungs- bzw. Kondensationsrate im Niedertemperatur- oder sogar Brennwertbetrieb (für den vorzugsweise - worauf weiter unten noch genauer eingegangen wird - ein zweiter Flachspaltkanal 6 vorgesehen ist) erreicht werden kann. Und da viel Kondensat letztlich gleichbedeutend mit einem hohen Wirkungsgrad ist, ist es Dank der Erfindung letztlich möglich, sehr kostengünstig einen kompakten, sehr effizienten Brennwert-Heizkessel herzustellen.

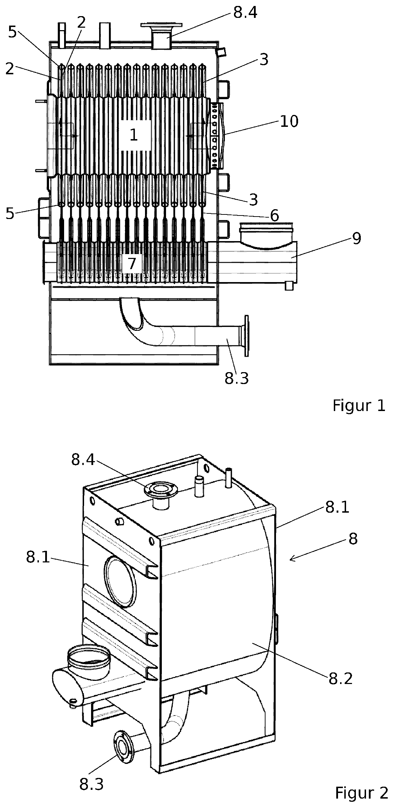

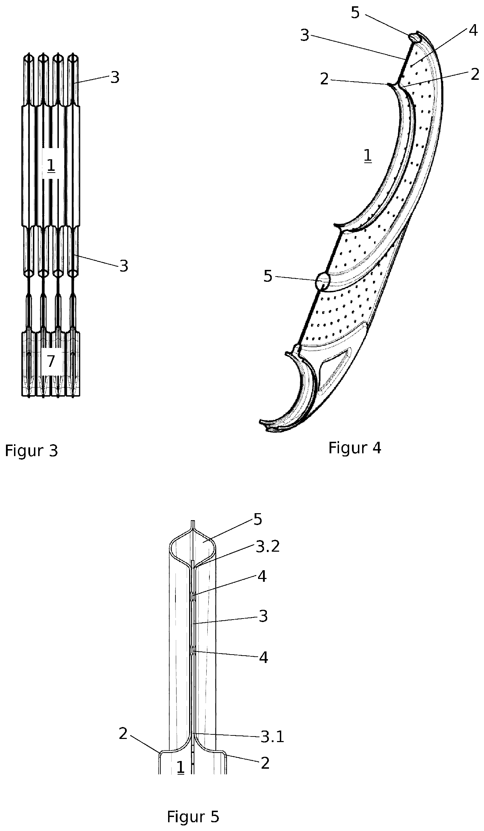

Wie insbesondere in Figur 5 gut zu erkennen, ist dabei besonders bevorzugt vorgesehen, dass der Flachspaltkanal von einem kammerseitig angeordneten Eintrittsquerschnitt 3.1 und von einem kammerabgewandt angeordneten Austrittsquerschnitt 3.2 begrenzt ausgebildet ist. Dabei ist weiterhin sowohl der Eintrittsquerschnitt 3.1 als auch der Austrittsquerschnitt 3.2 die Kammer 1 vollumfänglich umschließend und (dies gilt für die Ausführungsform gemäß Figur 1 bis 6) ein Abstand zwischen dem Eintrittsquerschnitt 3.1 und dem Austrittsquerschnitt 3.2 vorzugsweise (aber nicht zwingend) vollumfänglich konstant ausgebildet.

Um eine möglichst gleichmäßige Verteilung der Wärmestromdichten zu erreichen, ist weiterhin bevorzugt vorgesehen, dass wahlweise der Eintrittsquerschnitt 3.1 mit einer Einlaufkontur und/oder der Austrittsquerschnitt 3.2 mit einer Auslaufkontur versehen ist/sind.

Wie weiterhin aus den Figuren ersichtlich, ist besonders bevorzugt vorgesehen, dass der Flachspaltkanal parallel zur Hauptströmungsrichtung des Abgases eine Länge aufweist, die einem Vielfachen eines Abstandes der den Flachspaltkanal begrenzenden Plattenelemente 2 entspricht. In konkreten Zahlen ausgedrückt, ist besonders bevorzugt vorgesehen, dass der Flachspaltkanal eine Spaltlänge von etwa 30 bis 150 mm bei einem Abstand der Plattenelemente 2 zueinander (Spaltbreite) von etwa 0,5 bis 4 mm aufweist.

Damit ein von außen auf die Plattenelemente 2 wirkender Wasserdruck, was unten noch genauer erläutert wird, nicht zu einer Deformation des erfindungsgemäßen Flachspaltkanals führt, ist weiterhin bevorzugt vorgesehen, dass zwischen den Plattenelementen 2 im Bereich des Flachspaltkanals Abstützelemente 4 vorgesehen sind. Diese sind dabei in an sich bekannter Weise wahlweise als Noppen oder als längserstreckte Sicken ausgebildet, wobei aber grundsätzlich erfindungsgemäß die weitere Maßgabe gilt, dass der Abstand der Plattenelemente 2 zwischen dem Eintrittsquerschnitt 3.1 und dem Austrittsquerschnitt 3.2 - abgesehen von den gegebenenfalls aus Stabilitätsgründen vorgesehen singulären Abstützelementen 4 - zur Ausbildung des Flachspaltkanals gleichbleibend ausgebildet ist, d. h. dieser von ebenen Wänden mit sich über die Lauflänge höchstens minimal veränderndem Abstand begrenzt ist.

Ferner ist besonders bevorzugt vorgesehen, dass der Flachspaltkanal von einem aus den Plattenelementen 2 gebildeten und im Verhältnis zum Flachspaltkanal aufgeweiteten Sammelkanal 5 zur Aufnahme und Führung der abgekühlten Abgase (einschließlich Kondensat) umschlossen ausgebildet ist, woraus sich ebenfalls ergibt, dass der Sammelkanal 5 die Kammer 1 vollumfänglich umschließend und sich an den Austrittsquerschnitt 3.2 des Flachspaltkanals anschließend ausgebildet ist.

Um die Kondensationsrate noch weiter zu erhöhen, ist bei der Ausführungsform gemäß den Figuren 1 bis 6 dabei zusätzlich vorgesehen, dass der Sammelkanal 5 kammerabgewandt in einen zweiten Flachspaltkanal 6 ausmündend ausgebildet ist. Dieser zweite Flachspaltkanal 6 ist dabei vorzugsweise, wie insbesondere in Figur 6 dargestellt, einen Abschnitt des Sammelkanals 5 sichelförmig (bzw. wie ein Abschnitt eines Kreisringes) umschließend ausgebildet.

Weiterhin ist vorgesehen, dass wahlweise der erste Flachspaltkanal (also die Strömungsführung 3 - siehe Figur 7) direkt, der Sammelkanal 5 oder der zweite Flachspaltkanal 6 sammelkanalabgewandt in eine zweite Kammer 7 ausmündend ausgebildet ist. Diese zweite Kammer 7, die für einen besonders guten Kondensatabfluss (vorzugsweise senkrecht) unterhalb der ersten Kammer 1 angeordnet und ebenfalls aus den Plattenelementen gebildet ist, ist als Abgassammelkammer mit einem Abgasabfuhranschluss 9 ausgebildet. Außerdem ist dabei unter Berücksichtigung der Volumenreduktion des Abgases beim Abkühlen vorgesehen, dass die Kammer 1 ein Volumen aufweist, das größer als das Volumen der Abgassammelkammer ausgebildet ist.

Wie aus Figur 1 und 2 ersichtlich ist darüber hinaus bevorzugt vorgesehen, dass das Gehäuse 8 aus zwei parallel zu den Plattenelementen 2 orientierten Abschlussplatten 8.1 und einem zwischen den beiden Abschlussplatten 8.1 angeordneten, die Plattenelemente 2 vollumfänglich umschließenden Mantel 8.2 gebildet ist. Dabei ist das Gehäuse 8 ferner vorzugsweise unten mit einem Zufuhr- 8.3 und vorzugsweise oben mit einem Abfuhranschluss 8.4 für ein flüssiges Wärmeträgermedium versehen.

Ferner ist, nochmals in etwas anderen Worten ausgedrückt, bevorzugt vorgesehen, dass zwei Plattenelemente 2 eine zur Führung des Abgases ausgebildete Tasche bilden. Beim Heizkessel gemäß den Figuren 1 bis 6 sind insgesamt, wie oben bereits erwähnt, sechzehn solcher Taschen über entsprechende die Kammer 1 und die zweite Kammer 7 umschließende Abkantungen mit einander verbunden, insbesondere miteinander verschweißt. Dieses aus vielen Taschen bestehende Taschenpaket ist dann in dem mit flüssigem Wärmeträgermedium (insbesondere Heizkreiswasser) gefüllten Gehäuse 8 angeordnet.

In Figur 8 ist schließlich noch eine Ausführungform dargestellt, bei sowohl der erste Flachspaltkanal als auch der zweite Flachspaltkanal 6 aus mehreren parallel zueinander verlaufenden Einzelflachspaltkanälen gebildet ist (selbstverständlich kann auch nur der erste Flachspaltkanal oder nur der zweite Flachspaltkanal entsprechend ausgebildet sein). Diese Einzelflachspaltkanäle können dabei unterschiedlich lang ausgebildet sein und eine unterschiedliche Spalthöhe aufweisen. Wie oben bereits optional erwähnt, sind bei diesem Ausführungsbeispiel zur Ausbildung der Vielzahl von Einzelflachspaltkanälen die Abstützelemente 4 nicht als Noppen, sondern in Form von längserstreckten Sicken ausgebildet.

Der erfindungsgemäße Heizkessel funktioniert wie folgt:
In der Kammer 1 befindliches, heißes Abgas strömt durch die erfindungsgemäß als Flachspaltkanal ausgebildete Strömungsführung 3 in den Sammelkanal 5. Dank der Spaltströmung kann das Abgas dabei einen großen Teil seiner Wärme an das die Taschen umschließende Wärmeträgermedium (Heizkreiswasser) abgeben. Dieses strömt über den Zufuhranschluss 8.3 (auch Rücklaufanschluss genannt) in das Gehäuse 8 ein und verlässt dieses über den Abfuhranschluss 8.4 (auch Vorlaufanschluss genannt).

Bei der Ausführungform gemäß Figur 1 bis 6 gelangt das im Samelkanal 5 angekommene, bereits deutlich abgekühlte Abgas dann über den zweiten Flachspaltkanal 6, wo dank der Spaltströmung nochmals eine erhebliche Menge an Wärme an das Heizkreiswasser übertragen werden kann, zur zweiten, als Abgassammelkammer ausgebildeten Kammer 7. Von dort, wo sich schwerkraftbedingt auch das gesamte anfallende Kondensat zur Abfuhr aus dem Kessel sammelt, gelangt das inzwischen stark abgekühlte Abgas über den Abgasabfuhranschluss 9 zum Kamin des Gebäudes (nicht extra dargestellt), in dem der Heizkessel aufgestellt ist.

### Bezugszeichenliste

- 1: Kammer
- 2: Plattenelement
- 3: Strömungsführung
- 3.1: Eintrittsquerschnitt
- 3.2: Austrittsquerschnitt
- 4: Abstützelement
- 5: Sammelkanal
- 6: zweiter Flachspaltkanal
- 7: zweite Kammer
- 8: Gehäuse
- 8.1: Abschlussplatte
- 8.2: Mantel
- 8.3: Zufuhranschluss
- 8.4: Abfuhranschluss
- 9: Abgasabfuhranschluss
- 10: Deckelelement

## Patentansprüche

1. Heizkessel, umfassend eine zur Aufnahme und Führung heißer Abgase ausgebildete Kammer (1), die von zwei abgekantet ausgebildeten und sandwichartig zueinander angeordneten Plattenelementen (2) umschlossen und mit einer zwischen den Plattenelementen (2) ausgebildeten, zur Abkühlung der heißen Abgase verwendeten Strömungsführung (3) verbunden ist,
**dadurch gekennzeichnet,**
**dass** die Strömungsführung (3), die zur vollumfänglichen Einfindung des heißen Abgases in sie geeignet ausgebildet ist, als die Kammer (1) vollumfänglich umschließender Flachspaltkanal, der die Kammer (1) radial vollständig umschließt, ausgebildet ist.

2. Heizkessel nach Anspruch 1,
**dadurch gekennzeichnet,**
**dass** der Flachspaltkanal von einem kammerseitig angeordneten Eintrittsquerschnitt (3.1) und von einem kammerabgewandt angeordneten Austrittsquerschnitt (3.2) begrenzt ausgebildet ist.

3. Heizkessel nach Anspruch 2,
**dadurch gekennzeichnet,**
**dass** sowohl der Eintrittsquerschnitt (3.1) als auch der Austrittsquerschnitt (3.2) die Kammer (1) vollumfänglich umschließend ausgebildet ist.

4. Heizkessel nach einem der Ansprüche 1 bis 3,
**dadurch gekennzeichnet,**
**dass** der Flachspaltkanal parallel zur Hauptströmungsrichtung des Abgases eine Länge aufweist, die einem Vielfachen eines Abstandes der den Flachspaltkanal begrenzenden Plattenelemente (2) entspricht.

5. Heizkessel nach einem der Ansprüche 1 bis 4,
**dadurch gekennzeichnet,**
**dass** zwischen den Plattenelementen (2) im Bereich des Flachspaltkanals Abstützelemente (4) vorgesehen sind.

6. Heizkessel nach einem der Ansprüche 1 bis 5,
**dadurch gekennzeichnet,**
**dass** der Flachspaltkanal von einem aus den Plattenelementen (2) gebildeten und im Verhältnis zum Flachspaltkanal aufgeweiteten Sammelkanal (5) zur Aufnahme und Führung der abgekühlten Abgase umschlossen ausgebildet ist.

7. Heizkessel nach Anspruch 6,
**dadurch gekennzeichnet,**
**dass** der Sammelkanal (5) kammerabgewandt in einen zweiten Flachspaltkanal (6) ausmündend ausgebildet ist.

8. Heizkessel nach Anspruch 7,
**dadurch gekennzeichnet,**
**dass** der zweite Flachspaltkanal (6) sammelkanalabgewandt in eine zweite Kammer (7) ausmündend ausgebildet ist.

9. Heizkessel nach einem der Ansprüche 1 bis 8,
**dadurch gekennzeichnet,**
**dass** zwei Plattenelemente (2) eine zur Führung des Abgases ausgebildete Tasche bilden.

10. Heizkessel nach Anspruch 9,
**dadurch gekennzeichnet,**
**dass** die Tasche in einem ein flüssiges Wärmeträgermedium führenden Gehäuse (8) angeordnet ist.

## Claims

1. A boiler, consisting of a chamber (1) designed to hold and guide hot exhaust gases, which is enclosed by two plate elements (2) which have a beveled design and are arranged like a sandwich relative to each other, and connected with a flow guide (3) formed between the plate elements (2) and used for cooling the hot exhaust gases,
**characterized in that**
the flow guide (3), which is suitably designed for introducing the hot exhaust gas into it along its entire circumference, is designed as a flat slit channel that encloses the chamber (1) along its entire circumference and completely radially encloses the chamber (1).

2. The boiler according to claim 1,
**characterized in that**
the flat slit channel is bordered by an inlet cross section (3.1) arranged on the chamber side and an outlet cross section (3.2) arranged facing away from the chamber.

3. The boiler according to claim 2,
**characterized in that**
both the inlet cross section (3.1) and the outlet cross section (3.2) enclose the chamber (1) along its entire circumference.

4. The boiler according to one of claims 1 to 3,
**characterized in that**
the flat slit channel has a length parallel to the main direction of exhaust gas flow that is many times larger than the distance between the plate elements (2) bordering the flat slit channel.

5. The boiler according to one of claims 1 to 4,
**characterized in that**
support elements (4) are provided between the plate elements (2) in the area of the flat slit channel.

6. The boiler according to one of claims 1 to 5,
**characterized in that**
the flat slit channel is enclosed by a collection channel (5) comprised of the plate elements (2) and widened in relation to the flat slit channel for holding and guiding the cooled exhaust gases.

7. The boiler according to claim 6,
**characterized in that**
the collection channel (5) on its side facing away from the chamber leads into a second flat slit channel (6).

8. The boiler according to claim 7,
**characterized in that**
the second flat slit channel (6) on its side facing away from the collection channel leads into a second chamber (7).

9. The boiler according to one of claims 1 to 8,
**characterized in that**
two plate elements (2) comprise a pocket designed to guide the exhaust gas.

10. The boiler according to claim 9,
**characterized in that**
the pocket is arranged in a housing (8) that guides a liquid heat carrier medium.

## Revendications

1. Chaudière, comprenant une chambre (1) constituée pour recevoir et guider des gaz d'échappement chauds, qui est entourée par deux éléments de plaque (2) constitués repliés et disposés en sandwich l'un par rapport à l'autre et est reliée à un guidage d'écoulement (3) constitué entre les éléments de plaque (2), utilisé pour refroidir les gaz d'échappement chauds,
**caractérisée en ce que**
le guidage d'écoulement (3), qui est constitué adapté à l'introduction en périphérie complète des gaz d'échappement chauds dans celui-ci, est constitué sous la forme d'un conduit à fente plat entourant la chambre (1) sur toute la périphérie, qui entoure complètement la chambre (1) dans le sens radial.

2. Chaudière selon la revendication 1,
**caractérisée en ce que**
le conduit à fente plat est constitué limité par une section d'entrée (3.1) disposée du côté de la chambre et par une section de sortie (3.2) disposée éloignée de la chambre.

3. Chaudière selon la revendication 2,
**caractérisée en ce que**
tant la section d'entrée (3.1) que la section de sortie (3.2) sont constituées entourant la chambre (1) sur toute la périphérie.

4. Chaudière selon l'une quelconque des revendications 1 à 3,
**caractérisée en ce que**
le conduit à fente plat comporte parallèlement au sens d'écoulement principal des gaz d'échappement une longueur, qui correspond à un multiple d'une distance des éléments de plaque (2) limitant le conduit à fente plat.

5. Chaudière selon l'une quelconque des revendications 1 à 4,
**caractérisée en ce que**
des éléments de support (4) sont prévus entre les éléments de plaque (2) dans la zone du conduit à fente plat.

6. Chaudière selon l'une quelconque des revendications 1 à 5,
**caractérisée en ce que**
le conduit à fente plat est constitué entouré par un conduit collecteur (5) formé d'éléments de plaque (2) et élargi par rapport au conduit à fente plat pour recevoir et guider les gaz d'échappement refroidis.

7. Chaudière selon la revendication 6,
**caractérisée en ce que**
le conduit collecteur (5) est constitué éloigné de la chambre débouchant dans un deuxième conduit à fente plat (6).

8. Chaudière selon la revendication 7,
**caractérisée en ce que**
le deuxième conduit à fente plat (6) est constitué éloigné du conduit collecteur débouchant dans une deuxième chambre (7).

9. Chaudière selon l'une quelconque des revendications 1 à 8,
**caractérisée en ce que**
deux éléments de plaque (2) forment une poche constituée pour le guidage des gaz d'échappement.

10. Chaudière selon la revendication 9,
**caractérisée en ce que**
la poche est disposée dans un caisson (8) véhiculant un milieu caloporteur liquide.
